# EUROPEAN PATENT SPECIFICATION

(11) **EP 2 337 282 B1**
(45) Date of publication and mention of the grant of the patent: **13.02.2013**
(21) Application number: 09306268.5
(22) Date of filing: 18.12.2009
(51) Int. Cl.: H04L 12/66

(54) **Method of exchanging routing information between network nodes in a packet switched network**
Verfahren zum Austauschen von Routinginformationen zwischen Netzknoten in einem Paketvermittlungsnetz
Procédé d'échange d'information d'acheminement entre noeuds de réseau dans un réseau commuté par paquets

(43) Date of publication of application: 22.06.2011
(73) Proprietor: Alcatel Lucent, 75007 Paris (FR)
(72) Inventor: Puricelli, Paolo Maria, 20040, Caponago (IT); Ciammarughi, Laura, 20040, Caponago (IT)
(74) Representative: Urlichs, Stefan

(56) References cited:
- US-A1- 2005 047 353
- US-A1- 2009 201 937
- GUMASTE A ET AL: "An Evolutionary Approach to End-to-End Addressing and Routing in All-Ethernet Wide-Area Networks" COMMUNICATIONS, 2009. ICC '09. IEEE INTERNATIONAL CONFERENCE ON, IEEE, PISCATAWAY, NJ, USA, 14 June 2009 (2009-06-14), pages 1-6, XP031505706 ISBN: 978-1-4244-3435-0

## Description

### Field of the invention

The invention relates to a method of exchanging routing information in a packet switched network.

### Background

In packet switched networks, data packets are exchanged between network nodes according to network protocols. A first example for a network protocol is the internet protocol (IP protocol) as specified in the paper "RFC 791; Internet Protocol, Darpa Internet Program, Protocol Specification; Information Sciences Institute, University of Southern California, 4676 Admiralty Way, Marina del Rey, California 90291; September 1981", briefly called RFC 791. Another example of a network protocol is the Connectionless Protocol (CLNP) as specified in the paper "Information technology - Protocol for providing the connectionless-mode network service: Protocol specification ISO/IEC 8473-1; 1998", briefly called ISO 8473. A data packet, which is to be received by a network node, is forwarded by the network node to a further network node depending on the destination network address of the data packet and depending on a routing table stored within the network node. By considering the routing table and the destination address of the data packet, the network node is able to determine that adjacent network node to which the network node shall forward the data packet.

In order to have data at hand for building a routing table at a network node, the network nodes exchange link state messages according to the routing protocol called Intermediate System to Intermediate System protocol (IS-IS protocol). The IS-IS routing protocol is defined in the standard "ISO/IEC, FDIS 10589: 2001 (E), Information technology—Telecommunications and information exchange between systems — Intermediate System to Intermediate System intra-domain routing information exchange protocol for use in conjunction with the protocol for providing the connectionless- mode network service (ISO 8473)", briefly called ISO 10589. The IS-IS routing protocol as defined in ISO 10589 has been designed for use in conjunction with the network protocol CLNP as defined in ISO 8473. The IS-IS routing protocol has been extended for use in conjunction with the IP protocol in the paper "Network Working Group - Request for Comments: 1995, Ross W. Callon, Digital Equipment Corporation, December 1990, Use of OSI IS-IS for Routing in TCP/IP and Dual Environments", briefly called RFC 1195. According to RFC 1195, the IS-IS routing protocol can be used in networks having nodes supporting only the network protocol of IP, only the network protocol of CLNP or both of these network protocols.

One type of link state messages of the IS-IS routing protocol is called Link State Protocol Data Unit (LS PDU). This is a message, by which a node indicates to other nodes itself and a set of those nodes, which are adjacent to it. The link state message contains the node address of the node sending the message and a list of its adjacent nodes. The network node sends this link state message as a multicast message to other network nodes of the network.

The data of received link state messages is stored by the receiving network node in a link state database. The node runs an algorithm called Shortest Path First (SPF) on the database for building the routing table stored within the network node. Thus, when receiving LS PDU messages from all other network nodes of the network, a network node has the necessary information at hand for determining a routing table for forwarding data packets.

According to the previously filed but yet unpublished patent application of the applicant under the European Patent Application Number 08305656.4, it is proposed to include into a link state message LS PDU a data field, which indicates the types of network protocols that are supported by the network node sending the message. It is furthermore proposed, that a network node receiving the messages LS PDU uses a modified SPF algorithm for compiling different routing tables for different network protocols. For each network protocol supported by the network node, a different routing table is determined, such that for building the routing table with regard to a certain network protocol, only network nodes supporting the respective network protocol are taken into consideration. When the network node receives a data packet of the certain network protocol, the node uses that respective routing table which matches the respective network protocol. Thus, it is ensured, that data packets are not forwarded towards network nodes, which do not support the respective network protocol. It shall be assumed, that whenever the term "SPF algorithm" is used further on in this specification, it is referred to this SPF algorithm proposed in the European Patent Application Number 08305656.4.

In a packet switched network, the topology of the network may be such, that two network nodes, which both support the IP and the CLNP protocol, are connected by a path which is formed of such network nodes, which support only the CLNP protocol. In order to transmit data packets of the IP protocol between the two network nodes connected by the path, the network nodes encapsulate the IP data packets into data packets of the CLNP protocol according to the paper "Request For Comments 3147, Generic Routing Encapsulation over CLNS Networks, July 2001 ", briefly called RFC 3147. Thus, the IP data packets can be sent encapsulated within the CLNP data packets along the path, which is formed by network nodes supporting only the CLNP protocol. The network node receiving at the end of the path the IP data packets, which are encapsulated within the CLNP data packets, then decapsulates the IP data packets before sending them towards other network nodes of the network. This process of encapsulation and decapsulation is known under the term called "tunnel connection".

When relying on the IS-IS routing protocol for declaring links between a node and its adjacent nodes, the path between the two nodes forming the edges of the tunnel connection will be considered by other nodes of the network only for forwarding CLNP data packets, since the path between them is formed by network nodes supporting only the CLNP protocol. Therefore, even if the nodes at the edges of this path establish a tunnel connection for transmitting IP data packets encapsulated within CLNP data packets, this virtual connection is not advertised to other nodes of the network, since the two edge nodes are not adjacent to each other and thus do not declare each other as adjacent nodes in their adjacency lists within their link state messages.

The document US 2005/047353 A1 discloses routing protocols and algorithms referred to as Link State Path Vector techniques.

### Summary

According to the invention, a method of exchanging routing information between network nodes in packet switched network is proposed. The network nodes of the network advertise themselves to other network nodes, by indicating to the other network nodes themselves, network protocols supported by themselves and network nodes which are adjacent to them.

One of the network nodes is configured to encapsulate first data packets of a first network protocol into second data packets of a second network protocol for the purpose of transmitting the first data packets via the second data packets to a second network node. The network node is furthermore configured to advertise a pseudo network node to the other network nodes of the network. The network node does so, by indicating the pseudo network node as a network node that supports only the first network protocol but not the second network protocol, and by indicating the pseudo network node as a network node that is located between the first network node and the second network node.

By placing between the first network node and the second network node the pseudo network node as a network node supporting only the first network protocol, and by then advertising this pseudo network node to other network nodes of the network, a tunnel connection between the first and the second network node is advertised to other network nodes. Thus, the tunnel connection between the first and the second network node will be considered by other network nodes for forwarding data packets of the first network protocol.

### Brief description of the drawings

Fig. 1 shows a network containing network nodes supporting different network protocols.
Fig. 2 shows the network together with a first pseudo network node.
Fig. 3 shows the network together with the first pseudo network node and a second pseudo network node.
Fig. 4 shows the network together with the first pseudo network node, the second pseudo network node and a third pseudo network node.
Fig. 5 shows a hardware structure of a network node.
Fig. 6 shows first protocols carried out at the network node.
Fig. 7 shows second protocols carried out at the network node.

### Description of embodiments

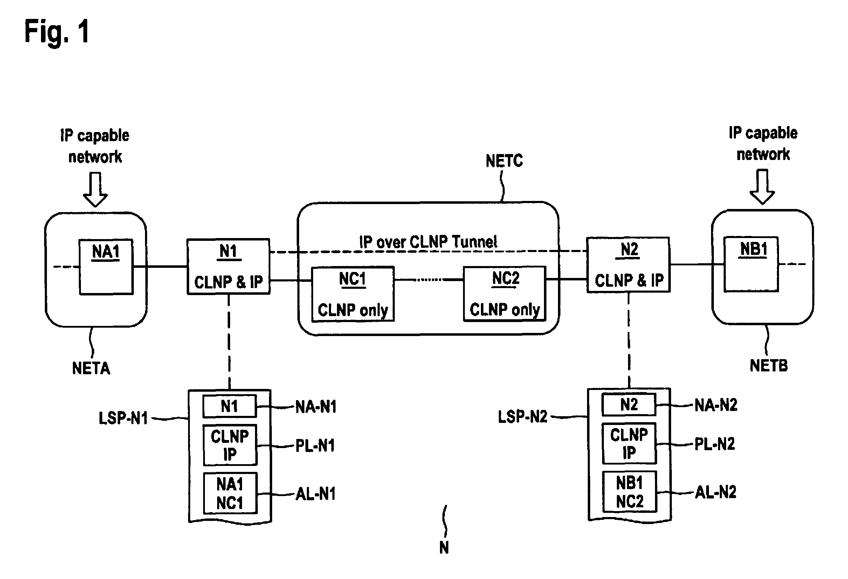

Fig. 1 shows a network, in which two network nodes N1, N2, which both support the CLNP and the IP protocol, are connected via a partial network NETC, which contains network nodes NC1, NC2 that only support the CLNP protocol. The node N1 is connected to the node NC1, while the node N2 in connected to the node NC2. The nodes NC1 and NC2 within the network NETC are connected, possibly via further network nodes.

The network node N1 is furthermore connected to a node NA1 that is located within a partial network NETA. The node NA1 supports at least the IP protocol.

The node N2 is furthermore connected to a network node NB1 of a partial network NETB. The node NB1 supports at least the IP protocol.

Between the nodes N1 and N2, a tunnel connection for transmitting IP data packets via the partial network NETC is given, in that the node N1 encapsulates IP data packets into CLNP data packets for transmitting them via the partial network NETC to the node N2. The node N2 then decapsulates the IP data packets from the CLNP data packets, before forwarding the IP data packets to the partial network NETB. In the opposite direction from the node N2 to the node N1 the some method of a tunnel connection by encapsulation and decapsulation is established.

The nodes of the network N exchange routing information according to the routing protocol IS-IS. The node N1 advertises itself, by sending to the other network nodes a link state message LSP-N1, which contains as the node address NA-N1 the node address of the node N1 itself, a protocol list PL-N1 that indicates the CLNP and the IP network protocol, and an adjacency list AL-N1 that contains as the adjacent nodes the nodes NA1 and NC1.

The node N2 advertises itself by sending to the other nodes of the network a link state message LSP-N2. This message LSP-N2 contains as the node address NA-N2 the node address of the node N2, a protocol list PL-N2 indicating the CLNP and the IP network protocol and an adjacency list AL-N2 indicating as adjacent neighbors the nodes NB1 and NC2.

The other nodes of the network N advertise themselves by distributing corresponding link state messages.

The network nodes within the partial networks NETA, NETB generate their routing tables based on received link state messages. Since the link state messages LSP-N1, LSP-N2 of the nodes N1, N2 do not declare a direct connection between the nodes N1, N2, the IP tunnel between the nodes N1 and N2 is not advertised to the nodes of the partial networks NETA, NETB. Thus, although there is a connection given for forwarding IP data packets from the node N1 to the node N2 via the IP tunnel, this IP connection or this IP tunnel will not be used since it is not made public to the other network nodes of the network.

If the nodes N1 and N2 would declare each other as adjacent nodes by including each other into their adjacency lists AL-N1, AL-N2, a link between them would be declared and advertised to the other network nodes. Since the nodes N1, N2 advertise themselves as nodes supporting the IP protocol and the CLNP protocol, other network nodes would consider this link not only for forwarding IP data packets but also for forwarding CLNP data packets. The result would be that network nodes of the partial network NETA would consider this link via the tunnel also for forwarding CLNP data packets towards the node N2 or network nodes of the partial network NETB. Since this connection of the IP tunnel does not support the transmission of CLNP data packets, any attempt by the nodes of the partial network NETA to have CLNP data packets forwarded from the node N1 via the IP tunnel to the node N2 would lead to a loss of these CLNP data packets, which is of disadvantage. Furthermore, nodes of the partial network NETC may consider the tunnel link between the nodes N1, N2 for having CLNP data packets forwarded, for instance from the node NC1 via node N1 and the node N2 to the node NC2, which also would lead to a loss of these CLNP data packets. Therefore, a simple declaration of the nodes N1 and N2 as adjacent nodes may lead to a loss of data packets within the network N.

For advertising the IP link between the nodes N 1 and N2, it would be possible not to rely on the routing information given by the IS₋IS protocol for forwarding IP data packets, but to use static routing information in all network nodes of the network N for forwarding IP data packets. This has the disadvantage, that the IS-IS routing protocol may be used for the CLNP data packets, but not for the IP data packets. This has the further disadvantage, that the routing information for forwarding data packets of the IP protocol is static information, which does not adapt itself in the case that the topology of the network N is changed. Therefore, a manual configuration of the static routing information at the network nodes of the network N would be necessary.

A further solution would be, to use the IS-IS routing protocol within the network N only for forwarding CLNP data packets, and to use a second dynamic routing protocol for forwarding data packets of the IP protocol in all network nodes of the network. A dynamic routing protocol for forwarding IP data packets may be the OSPF routing protocol as known from the paper "Request For Comments 2328, OSPF Version 2, April 1998", briefly called RFC 2328. This is of disadvantage, since two routing protocols would have to be used in parallel for supporting forwarding of data packets of two network protocols.

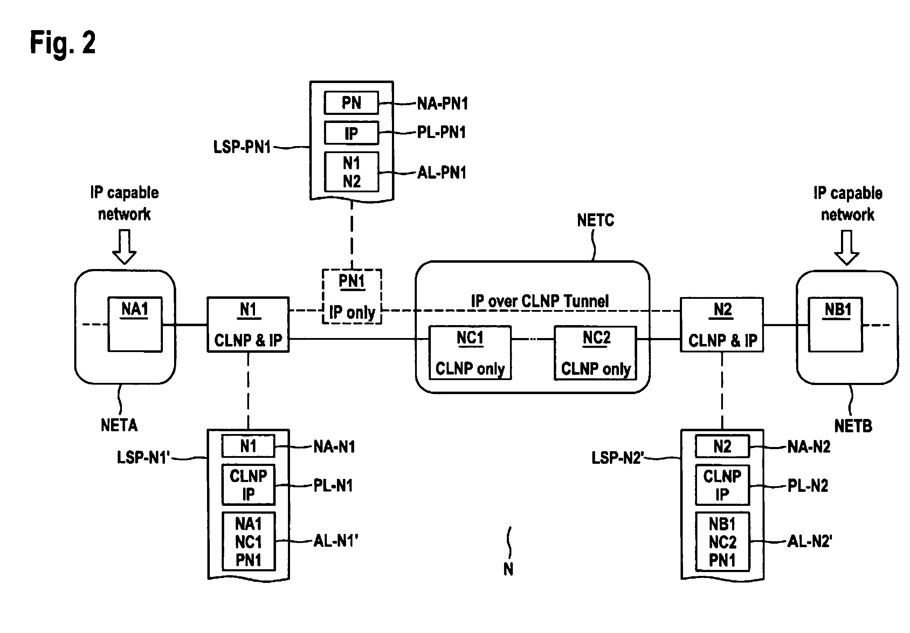

Fig. 2 shows the network N according to the proposed solution. The network N contains all network elements as previously shown in Fig. 1, as well as a pseudo network node PN1 which is placed at the IP tunnel and thus located between the nodes N1 and N2. Fig. 2 shows furthermore a modified link state message LSP-N1' which is distributed by the node N 1 , a modified link state message LSP-N2', which is distributed by the node N2 and a link state message LSP-PN1 which is distributed by the node N1 on behalf of the pseudo network node PN1. The content of these link state messages will be described in detail later on.

The node N1 advertises the pseudo network node PN1 as a network node which supports the IP protocol, but not the CLNP protocol. The pseudo network node PN1 is advertised by the node N1 as a network node located between the nodes N 1 and N2. Thus, the pseudo network node PN 1 represents the IP tunnel between the nodes N 1 and N2. The link state message LSP-PN1, which is distributed by the node N1 on behalf of the pseudo network node PN1, contains different data elements. The message LSP-PN1 contains as the node address NA-PN1 of the node sending the message the node address of the pseudo node PN1. Furthermore, the message LSP-PN1 contains a protocol list PL-PN1 which indicates the IP protocol but not the CLNP protocol. Further still, the message LSP-PN1 contains an adjacency list AL-PN1 which indicates the node N1 and the node N2 as adjacent nodes.

Other network nodes of the network N receiving the message LSP-PN1 will recognize the pseudo network node PN1 as a node supporting the IP protocol but not the CLNP protocol, and they will recognize the pseudo network node PN1 as a node connecting the nodes N1 and N2. Therefore, other network nodes will consider to forward IP data packets via the node N1 to the pseudo node PN1 and from there to the node N2, but will not consider to forward CLNP data packets from the node N 1 via the node PN 1 to the node N2.

Thus, the advertisement of the pseudo node PN 1 as a node supporting only the protocol that is supported by the tunnel connection, is a solution which makes it possible to use only the IS-IS protocol at all network nodes of the network for forwarding data packets of the IP and the CLNP protocol. Since network nodes of the partial network NA will not consider forwarding CLNP data packets via the pseudo node, it is ensured, that the CLNP data packets will not be lost in an attempt to have the CLNP data packets forwarded via the tunnel connection, since this attempt will not be made. Furthermore, since only the IS-IS protocol can be used by the network nodes for forwarding data packets of different network protocols, it is not necessary to use different routing protocols for different network protocols within the network N. Even furthermore, by relying on the IS-IS routing protocol at all network nodes of the network, no static routing information has to be used at any network node for forwarding data packets of the IP protocol. Thus, the proposed solution is a solution in which the routing information at all network nodes can adapt automatically in the case that the topology of the network changes.

The creation and the advertisement of the pseudo node PN 1 via the node N 1 causes an addition of the pseudo node PN1 to the set of adjacent nodes of the node N1. Therefore, the node N1 advertises itself by distributing a link state message LSP-N1', which is in general the same as the link state message LSP-N1 shown in Fig. 1, but which contains a modified adjacency list AL-N1'. This adjacency list AL-N1' contains as the adjacent nodes of the node N 1 the previously contained nodes NA1, NC1 and in addition the pseudo network node PN 1.

The creation of the pseudo network node PN 1 causes also an addition of the node PN1 to the set of adjacent nodes of the node N2. Therefore, the node N2 advertises itself by distributing a modified link state message LSP-N2', which is in general the same as the message LSP-N2 in Fig. 1, but contains a modified adjacency list AL-N2'. The adjacency AL-N2' contains the previously contained nodes NB2, NC2 and the pseudo node PN1 as adjacent nodes.

The node N1 chooses the node address of the pseudo node PN1 as described now in detail. According to the standard ISO 10589, a link state message LS PDU contains the node address of the network node in the form of a Link State Packet Identifier (LSP ID). The LSP ID consists the so called Source Identifier (source ID) having a length called ID length, which is a length of six bytes. The LSP ID consists furthermore of two further bytes which are the byte called Pseudo Node Identifier (pseudo node ID) and the byte called Link State Packet Number (LDP number).

For the node N1, which is a real node placed in the network, the source ID is the node address of the node N1. The following byte, which is the pseudo node ID, is set to 0, which is mandatory for real network nodes. For pseudo nodes, the pseudo node ID is set to a value different to 0. The byte LSP number is of importance for identifying a node via its node address, since an SPF algorithm operates only on the source ID together with the pseudo node ID as the node address. The LSP number is not taken into consideration by the SPF algorithm.

The node N1 sets the pseudo node address of the pseudo node PN1, by setting the source ID of the pseudo node PN1 to the same value as the source ID of the node N1 itself. Furthermore, the node N1 sets the pseudo node address of the pseudo node ID to a value different to 0. An SPF algorithm of a node receiving a link state message containing the pseudo node address as node a node address, will then indentify the pseudo node PN 1 as just another node within the network. Since the pseudo node ID has a length of one byte, it is possible to choose up to 255 different values for identifying 255 different pseudo nodes.

According to the IS-IS routing protocol, a network node discovers a neighboring node as an adjacent node by exchanging handshake messages with the neighboring node. According to an extension of the standard ISO 10589 as described in the paper RFC "Network Working Group, Request for Comments: 5303 , Three-Way Handshake for IS-IS Point-to-Point Adjacencies, October 2008" "IEEE Std 802.2-1998, Information processing systems - Local area networks - Part 2: logical link control, 31 Dec 1989, E-ISBN: O-7381-4601-3", briefly called RFC 5303, a procedure called three-way handshake is known for discovering adjacent network nodes. As proposed in the previously filed but yet unpublished European Patent Application of the applicant with the application number 09306252.9, a further extension of the three-way handshake message as proposed in the standard RFC 5303 is given. According to the solution, the handshake messages which are exchanged support the discovery of adjacent nodes having a node address of a length of seven bytes, thus supporting a node address consisting of a source ID and a pseudo node identifier. The proposed handshake messages contain a node address of that node, which sends the handshake message and a data field, which contains a pseudo node identifier of a pseudo node that is associated with the node sending the message. Furthermore, the proposed handshake messages contain a node address of the network, which is discovered by the sending node as an adjacent node. Even furthermore, the proposed handshake messages contain a data field, which contains a pseudo node identifier of a pseudo node that is associated with the adjacent node.

The nodes N1, N2 exchange via the IP tunnel handshake messages, that contain the pseudo node identifier of the pseudo node PN1. Via this exchange of handshake messages, the node N2 discovers the created pseudo node PN 1 as its adjacent neighbor, and therefore enters the pseudo node PN1 into the adjacency list AL-N2'. For exchanging the handshake messages, the nodes N1, N2 encapsulate the handshake messages into CLNP data packets for sending the handshake messages via the CLNP data packets along the tunnel.

According to an alternative solution, the node N2 enters the pseudo node PN1 into its adjacency list AL-N2' due to a manual configuration performed at the node N2.

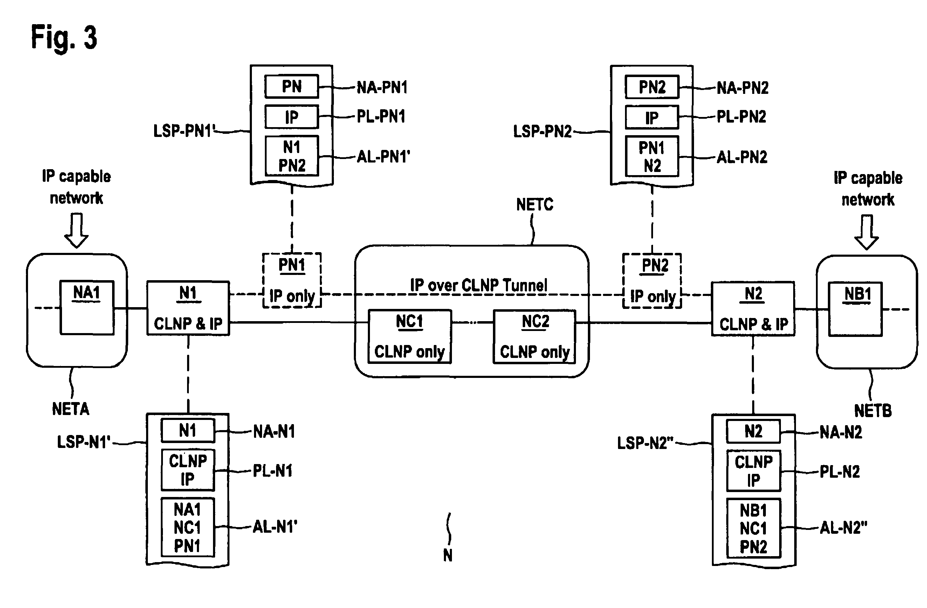

Fig. 3 shows a further embodiment of the proposed solution. Fig. 3 shows all network elements shown in Fig. 2 as well as a pseudo node PN2 which is located between the pseudo node PN1 and the node N2. The pseudo node PN2 is a pseudo node which is created and advertised by the node N2. The node N2 advertises the pseudo node PN2 by distributing link state messages LSP-PN2. The message LSP-PN2 contains as node address NA-PN2 the node address of the pseudo node PN2. Furthermore, the message LSP-PN2 contains a protocol list PL-PN2 indicating the IP protocol but not the CLNP protocol, Therefore, the node N2 advertises the pseudo node PN2 as a node supporting that network protocol, which is supported by the tunnel connection. Further still, the message LSP-PN2 contains an adjacency list AL-PN2 which indicates the node N2 and the pseudo node PN1 as adjacent neighbors of the node PN2.

The node N1 advertises the pseudo node PN1 by distributing link state messages LSP-PN1'. The message LSP-PN1' is in general the same as the message LSP-PN 1 shown in Fig. 2, but contains a modified adjacency list AL-PN1'. The adjacency list AL-PN1' contains as adjacent nodes the node N1 and the pseudo node PN2.

The node N2 advertises itself by distributing a link state message LSP-N2", which is in general the same as the message LSP-N2' shown in Fig. 2, but contains a modified adjacency list AL-N2". The adjacency list AL-N2" contains as adjacent nodes of the node N2 the nodes NB1, NC2 and the pseudo node PN2.

The node N 1 discovers the pseudo node PN2 as a network node adjacent to the pseudo node PN1, by exchanging via the tunnel connection handshake messages with the node N2 as previously described above. The node N2 discovers the pseudo node PN1 as a network node adjacent to the pseudo node PN2 by exchanging via the tunnel connection with the network node N1 handshake messages as previously described above. Alternatively, the nodes N1, N2 modify the adjacency lists AL-PN1', AL-PN2, AL-N2", AL-N1' due to a manual configuration carried out at the network nodes N1, N2.

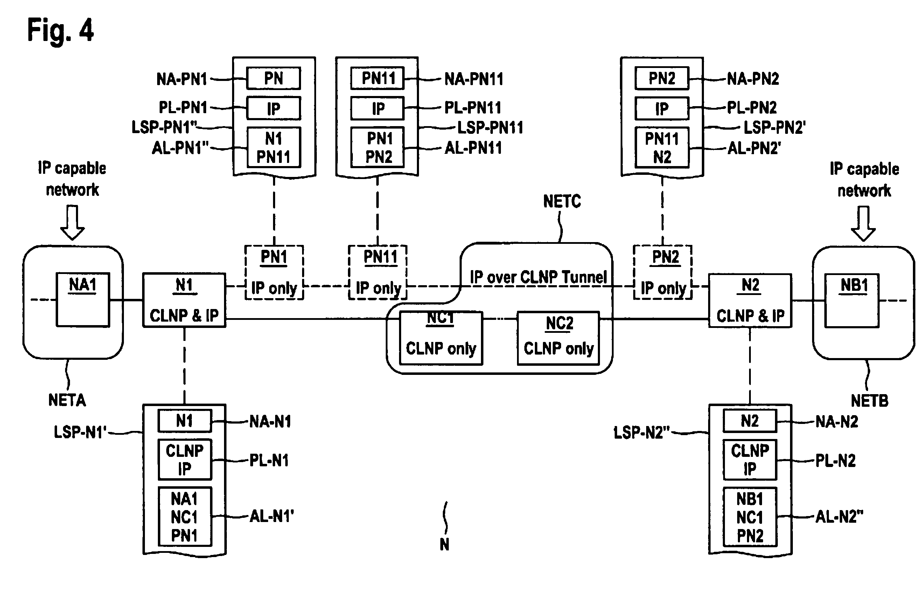

Fig. 4 shows a further embodiment of the proposed solution. According to Fig. 4, all network elements shown in Fig. 3 are shown, as well as a pseudo node PN11 that is located between the nodes PN1 and PN2. The pseudo node PN11 is a pseudo node that is created and advertised by the node N1. The node N1 advertises the node PN1 by distributing link state messages LSP-PN11. The message LSP-PN11 contains as node address NA-PN11 the node address of the node PN11. Furthermore, the message LSP-PN11 contains a protocol list PL-PN11 which indicates the IP protocol but not the CLNP protocol. Further still, the message LSP-PN11 contains an adjacency list AL-PN11 which indicates as adjacent neighbors of the node PN 11 the pseudo node PN1 and the pseudo node PN2.

The pseudo node PN1 is advertised by the node N1 by distributing link state messages LSP-PN 1". The message LSP-PN1" is in general the some as the message LSP-PN1' shown in Fig. 3, but contains a modified adjacency list AL-PN1". This adjacency list AL-PN1 "indicates as adjacent neighbors of the node PN1 the nodes N1 and PN11.

The pseudo node PN2 is advertised by the node N2 by distributing link state messages LSP-PN2', which is in general the same as the message LSP-PN2 shown in Fig. 3, but which contains a modified adjacency list AL-PN2'. The adjacency AL-PN2' indicates as adjacent neighbors of the node PN2 the node PN11 and the node N2.

The node N2 discovers the pseudo nodes PN1, PN 11, which are advertised by the node N1, by exchanging with the node N1 handshake messages as previously described above.

The node N1 discovers the pseudo node PN2 by exchanging with the node N2 handshake messages as previously described above.

Alternatively, the creation of the adjacency list AL-PN 1 ", AL-PN11, AL-PN2' is carried out the nodes N1, N2 due to a manual configuration carried out at the nodes N1, N2.

The encapsulation of data packets of the IP protocol into data packets of the CLNP protocol is just an example of encapsulating first data packets of a first network protocol into second data packets of a second network protocol. According to an alternative solution, data packets of the CLNP protocol are encapsulated into data packets of the IP protocol according to the standard "Request For Comments 1702, Generic Route Encapsulation over IPv4 Networks, October 1994", briefly called RFC 1702.

By creating and advertising the pseudo node PN11 as a node located along that connection, which represents the tunnel, the node N1 creates also further links, which connect the pseudo node PN11 with the pseudo nodes PN1 and PN2. According to the standard ISO 10589, a link state message which advertises a node contains also for each link leading to one of the adjacent nodes of the advertised nodes, a metric which represents the cost of transmission along that link. Thus, the link state message LSP-PN11 which advertises the pseudo node PN11 contain for the links leading to the adjacent nodes PN1, PN2 metrics, which increase the overall metric of the connection between the nodes N1 and N2 represented by the tunnel. Thus, by creating the pseudo node PN 11, the node N 1 is able to increase the overall metric of the connection between the nodes N1 and N2, which is represented by the tunnel.

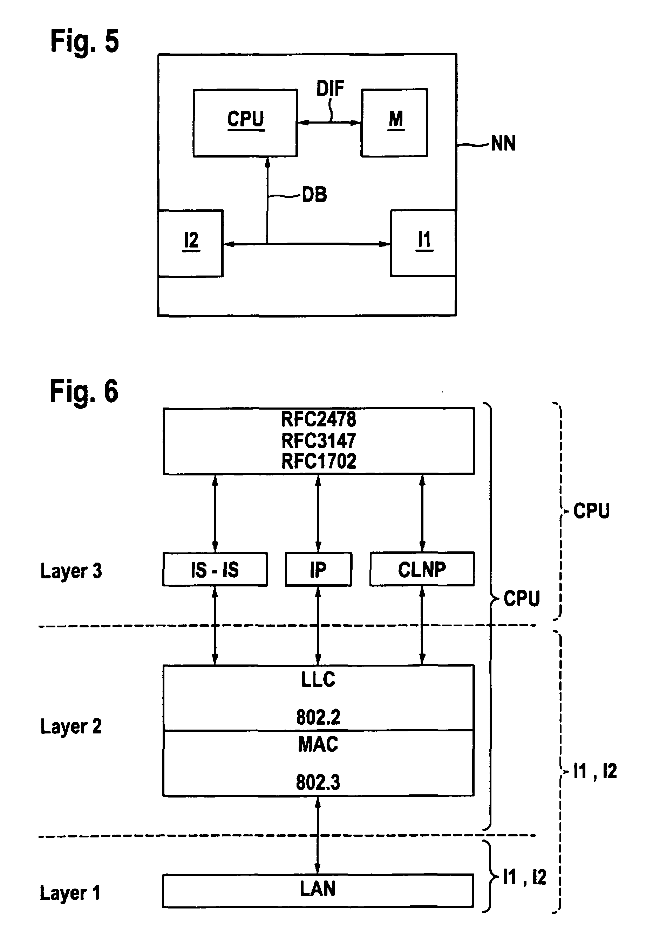

Fig. 5 shows a network node NN according to a first embodiment. The network node NN contains a processor CPU and a memory M. The processor CPU and the memory M are connected via data interface DIF. The network node NN contains interfaces I1, 12 for exchanging data packets according to the IP protocol and the CLNP protocol with other network nodes. The interfaces 11, 12 are connected via a data bus DB to the processor CPU. Via the interfaces I1, 12 the network node NN exchanges furthermore routing messages according to the IS-IS protocol.

The processor CPU and the memory M form control means of the network node NN.

The number of processors contained in the network node NN is not limited to one processor, there may be multiple processors working in parallel and performing different types of protocols within the network node. Furthermore, more than one memory may be contained in the network node. Further still, the number of interfaces via which the network node is connected to other network nodes is not limited to two but may be larger.

Within the memory M, the network node NN stores information such as routing information which the network node receives from other network nodes. Furthermore, the processor CPU generates from the routing information stored within the memory M different routing tables for different network protocols which are supported by the network node NN.

The processor is adapted to generate link state messages for advertising to other network nodes the network node itself. Via such a link state message the processor indicates the network node, as set of network protocols that are supported by the network node and a set of adjacent nodes which are adjacent to the network node. The processor CPU sends the links state messages via the interfaces 11, 12 to the other network nodes. The processor CPU is part of the control means configured to encapsulate data packets of the IP network protocol into data packets of the CLNP network protocol for transmitting the IP data packets via the CLNP data packets to a second network node not shown in Fig. 5.

Furthermore, the processor CPU is configured to advertise a pseudo network node to other network nodes. The processor CPU does so, by indicating the pseudo network node as a network supporting the IP protocol but not the CLNP protocol, and by indicating the pseudo network node as a network node that is located between the network node NN and the other network node to which the IP data packets are transmitted via the encapsulation into CLNP data packets.

Fig. 6 shows different protocols of different protocol layers carried out within the network node NN. At the Layer 3, also called the Network Protocol Layer, the IS-IS protocol, the IP protocol and the CLNP protocol are carried out. Above these protocols, the Generic Routing Encapsulation Protocol according to the standard "Request For Comments 2784, Generic Route Encapsulation, March 2000", briefly called RFC 2784, is carried out for encapsulating routing messages or data packets of network protocols into data packets of one of the network protocols.

The Layer 3 protocols interact with the Layer 2 protocols, which are also called protocols of the Data Link Layer. The highest sub-layer of the Data Link Layer is the Logical Link Control Protocol according to the standard "IEEE Std 802.2-1998, Information processing systems - Local area networks - Part 2: logical link control, 31 Dec 1989, E-ISBN: O-7381-4601-3", briefly called LLC. This protocol LLC directly interacts with the protocols of the Network Protocol Layer. Directly below the protocol LLC, there is placed the sub-layer of Media Access Control according to the standard "IEEE Std 802.3-2008, IEEE Standard for Information technology- -Telecommunications and Information exchange between systems--Local and metropolitan area networksSpecific requirements Part 3: Carrier Sense Multiple Access with Collision Detection (CSMA/CD) Access Method and Physical Layer Specifications - Section Five, 2008, ISBN: 973-07381-5797-9", briefly called MAC. This lower sub-layer of the Data Link Layer interacts with the protocol of the Layer 1, which is also called the Physical Layer. At this Physical Layer, a protocol according to the Local Area Network LAN is running, which may be a protocol according to the well known protocol 10Base-T. The protocols of the Layer 2, which are the LLC protocol and the MAC protocol, together with the LAN protocol of the Layer 1 are well known as the technology called Ethernet.

Fig. 6 furthermore illustrates, indicated by the solid line brackets, which types of protocols are carried out at which hardware within the network node NN.

The processor CPU is adapted to run protocols of the Layer 3 and the Layer 2. Via the data bus DB, the processor CPU exchanges signals, such as Ethernet frames, with the interfaces 11,12. The interfaces 11, 12 are adapted to run the protocols of the Physical Layer.

The different protocols depicted in Fig. 6 running on the processor CPU do not have to run as one single software, but may run on the processor CPU as different processing threads. Furthermore, the different protocols of the Layer 3 and the Layer 2 may run as different processing threads on different CPUs, which are connected via the data bus DB.

According to the embodiment shown in Fig. 6, indicated by the solid line brackets, the processor CPU is adapted to run protocols of the Layer 3 and the Layer 2. The interfaces 11, 12 are adapted to run protocols of the Layer 1.

According to an alternative solution, also indicated in Fig. 6 by the dashed line brackets, the processor CPU is adapted to run protocols of the Layer 3. The interfaces 11, 12 are adapted to run protocols of the Layer 2 and the Layer 1,

The implementation of protocols within the interfaces 11 , 12 may be done as hardware or as software running on processors comprised within the hardware of the interfaces 11,12.

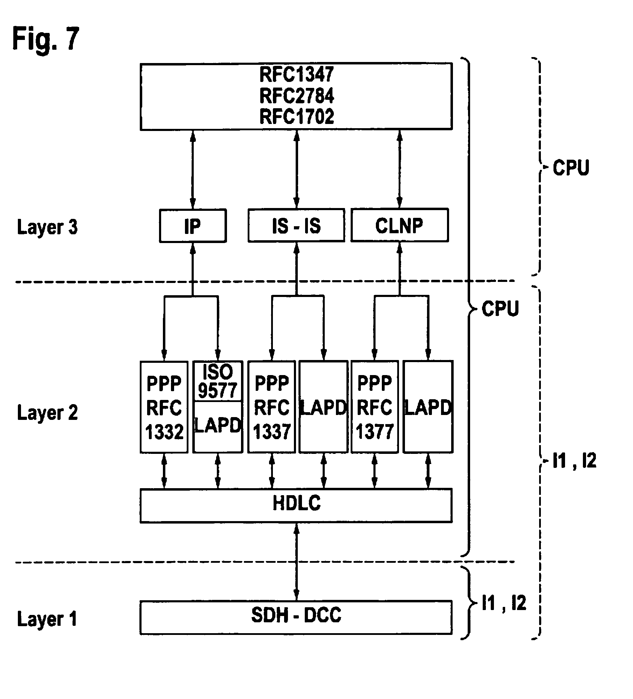

A second embodiment of carrying out protocols at a network node is shown in Fig. 7. In this embodiment, the structure of the network node NN is in general the same as depicted in Fig. 5. Fig. 7 shows the different protocols which are carried by different parts of the hardware of the network node NN.

At the Layer 3, the network protocols IP and CLNP are carried out as well as the routing protocol IS-IS.

Above the protocols of the Layer 3, the Generic Routing Encapsulation protocol RFC 2784 is carried out for encapsulating routing messages or data packets of network protocols as previously described above.

At the Layer 2, different protocols are carried out for different types of messages or data packets received from the Layer 3. Data packets are originating from the CLNP protocol are passed on to each the Link Access Procedure for D-channel LAPD as defined in the paper "ITU-T Recommendation Q.921 (09/97), Digital Subscriber Signaling System No. 1- Data Link Layer", briefly called Q.921, or to the Point to Point Protocol PPP as defined in the paper "Network Working Group, RFC 1377 - The PPP OSI Network Layer Control Protocol (OSINLCP), November 1992", briefly called RFC 1377. From either of these two protocols at the Layer 2, the resulting data is passed on to the next lower sub-layer of the Layer 2, which carries out framing of the data according to the protocol of High-Level Data Link Control HDLC.

At the Layer 1, data, which is received from the Layer 2, is transmitted by means of a protocol supporting data transfer via the Data Communication Channel DCC of a network, according to Synchronous Digital Hierarchy SDH, which is indicated as SDH-DCC.

Data packets originating from the IP protocol at the Layer 3 are passed on to the Layer 2, namely to either the Point to Point protocol PPP according to the standard "Request for Comments, The PPP internet Protocol Control Protocol (IPCP), May 1992", briefly called RFC 1332, or to an LAPD protocol as defined in the standard "ISO/IEC TR 9577, Information technology -- Protocol identification in the network layer ,1999", briefly called ISO 9577. From either of these Layer 2 protocols, the originating data is passed on to the protocol of HDLC, which handles the data from the Point to Point protocol PPP or the LAPD protocol as previously described above.

Routing messages originating at the Layer 3 from the IS-IS protocol are passed on to either the LAPD protocol or to a Point to Point protocol according to the standard RFC 1377. The data originating from these Layer 2 protocols is then passed on to the HDLC protocol, which handles the data as described above.

The HDLC protocol passes the data on to the next lower layer, which is the Layer 1, where the data is then transmitted via the Data Communication Channel DCC of the SDH network to other network nodes.

As indicated in Fig. 7, the processor CPU is adapted to run the protocols of the Layer 3 the Layer 2. Furthermore, the interfaces I1 , I2 are adapted to run the protocols of the Layer 1.

According to an alternative solution, also indicated in Fig. 7 by the dashed line bracket, the processor CPU is adapted to carry out the protocols of the Layer 3, while the interfaces I1, I2 are adapted to carry out the protocols of the Layer 2 and the Layer 1.

The implementation of protocols within the interfaces 11, 12 may be done as hardware or as software running on processors comprised within the hardware of the interfaces 11,12.

## Claims

1. Method of exchanging routing information between network nodes in a packet switched network,
wherein said network nodes advertise themselves to other network nodes by indicating to said other network nodes
- themselves,
- network protocols supported by themselves, and
- network nodes adjacent to themselves,
wherein a first of said network nodes (N1) is configured to encapsulate first data packets of a first network protocol into second data packets of a second network protocol for transmitting said first data packets via said second data packets to a second network node (N2),
**characterized in that** said first network node is configured to advertise a pseudo network node (PN1) to said other network nodes, by indicating said pseudo network node (PN1) as a network node supporting said first network protocol but not said second network protocol, and by indicating said pseudo network node (PN1) as a network node located between said first network node (N1) and said second network node (N2).

2. Method according to claim 1,
wherein said first network node (N1) indicates
- said first network node (N1) and
• either said second network node (N2)
• or a further pseudo network node advertised by said first (N1) or said second network node (N2)
as network nodes adjacent to said pseudo network node (PN1).

3. Method according to claim 1 to 2,
wherein said network nodes advertise themselves by sending to said other network nodes at least one link state message containing
- a network node address indicating the respective network node,
- an adjacency list indicating adjacent network nodes adjacent to the respective network node, and
- a network protocol list indicating network protocols supported by the respective network node.

4. Method according to claim 1 to 3,
wherein said network nodes generate from received link state messages different routing tables for different network protocols supported by the respective network node.

5. Method according to claim 4,
wherein said first network node (N1) advertises said pseudo network node (PN1) by sending to said other network nodes at least one link state message containing
- a pseudo network node address indicating said pseudo network node (PN1),
- an adjacency list indicating said first network node (N1) and
• either said second network node (N2)
• or a further pseudo network node advertised by said first (N1) or said second (N2) network node, and
- a network protocol list indicating said first network protocol but not said second network protocol.

6. Method according to claim 1 to 5,
wherein said first network node (N1) and said second network node (N2) are both configured to support said first network protocol and said second network protocol.

7. Method according to claim 1 to 6,
wherein said first network node (N1) advertises itself to said other network nodes, by indicating said pseudo network node (PN1) as a network node adjacent to said first network node (PN1).

8. Method according to claim 1 to 7,
wherein said first network node (PN1) and said second network node (PN2) exchange handshake messages with each other that contain a data field indicating said pseudo network node (PN1).

9. Method according to claim 1 to 8,
wherein said first network node (N1) and said second network node (N2) encapsulate said handshake messages into third data packets of said second network protocol for exchanging said handshake messages via said third data packets.

10. Network node (NN),
wherein said network node (NN) comprises control means (CPU, M) which are adapted to advertise said network node (NN) to other network nodes by indicating to said other network nodes
- said network node (NN),
- network protocols supported by said network node, and
- network nodes adjacent to said network node,
wherein said control means (M, CPU) are configured to encapsulate first data packets of a first network protocol into second data packets of a second network protocol for transmitting said first data packets via said second data packets to a second network node,
**characterized in that** said control means (M, CPU) are configured to advertise a pseudo network node to said other network nodes, by indicating said pseudo network node as a network node supporting said first network protocol but not said second network protocol, and by indicating said first network node as a network node located between said first network node (N1) and said second network node (N2).

## Patentansprüche

1. Verfahren zum Austauschen von Routing-Informationen zwischen Netzwerkknoten in einem paketvermittelten Netzwerk,
wobei sich die besagten Netzwerkknoten selbst bei anderen Netzwerkknoten anzeigen, indem sie den besagten anderen Netzwerkknoten angeben:
- Sich selbst,
- die von ihnen unterstützten Netzwerkprotokolle, und
- mit ihnen benachbarte Netzwerkknoten,
wobei ein erster der besagten Netzwerkknoten (N1) für das Einkapseln erster Datenpakete eines ersten Netzwerkprotokolls in zweite Datenpakete eines zweiten Netzwerkprotokolls für die Übertragung der besagten ersten Datenpakete über die besagten zweiten Datenpakete an einen zweiten Netzwerkknoten (N2) konfiguriert ist, **dadurch gekennzeichnet, dass** der besagte erste Netzwerkknoten dafür konfiguriert ist, bei den besagten anderen Netzwerkknoten einen Pseudo-Netzwerkknoten (PN1) anzuzeigen, indem er den besagten Pseudo-Netzwerkknoten (PN1) als einen Netzwerkknoten, der das besagte erste Netzwerkprotokoll, jedoch nicht das besagte zweite Netzwerkprotokoll unterstützt, angibt, und indem er den besagten Pseudo-Netzwerkknoten (PN1) als einen zwischen dem besagten ersten Netzwerkknoten (N1) und dem besagten zweiten Netzwerkknoten (N2) angeordneten Netzwerkknoten angibt.

2. Verfahren nach Anspruch 1,
wobei der besagte erste Netzwerkknoten (N1) angibt:
- Den besagten ersten Netzwerkknoten (N1), und
• entweder den besagten zweiten Netzwerkknoten (N2)
• oder einen von dem besagten ersten (N1) oder dem besagten zweiten Netzwerkknoten (N2) angezeigten weiteren Pseudo-Netzwerkknoten als mit dem besagten Pseudo-Netzwerkknoten (PN1) benachbarte Netzwerkknoten.

3. Verfahren nach Anspruch 1 bis 2,
wobei sich die besagten Netzwerkknoten selbst anzeigen, indem sie den besagten anderen Netzwerkknoten mindestens eine Verbindungszustandsnachricht senden, welche enthält:
- Eine Netzwerkknotenadresse, welche den jeweiligen Netzwerkknoten angibt,
- eine Nachbarschaftsliste, welche mit dem jeweiligen Netzwerkknoten benachbarte Netzwerkknoten angibt, und
- eine Netzwerkprotokollliste, welche die von dem jeweiligen Netzwerkknoten unterstützten Netzwerkprotokolle angibt.

4. Verfahren nach Anspruch 1 bis 3,
wobei die besagten Netzwerkknoten unterschiedliche Routing-Tabellen für unterschiedliche, von dem jeweiligen Netzwerkknoten unterstützte Netzwerkprotokolle aus den empfangenen Verbindungsstreckenzustandsnachrichten erzeugen.

5. Verfahren nach Anspruch 4,
wobei der besagte erste Netzwerkknoten (N1) den besagten Pseudo-Netzwerkknoten (PN1) anzeigt, indem er den besagten anderen Netzwerkknoten mindestens eine Verbindungszustandsnachricht sendet, welche enthält:
- Eine Pseudo-Netzwerkknotenadresse, welche den besagten Pseudo-Netzwerkknoten (PN1) angibt,
- Eine Nachbarschaftsliste, welche den besagten ersten Netzwerkknoten (N1) und
• entweder den besagten zweiten Netzwerkknoten (N2)
• oder einen von dem besagten ersten (N1) oder dem besagten zweiten (N2) Netzwerkknoten angezeigten weiteren Pseudo-Netzwerkknoten
angibt, und
- eine Netzwerkprotokollliste, welche das besagte erste Netzwerkprotokoll, jedoch nicht das besagte zweite Netzwerkprotokoll angibt.

6. Verfahren nach Anspruch 1 bis 5,
wobei sowohl der besagte erste Netzwerkknoten (N1) als auch der besagte zweite Netzwerkknoten (N2) für die Unterstützung des besagten ersten Netzwerkprotokolls und des besagten zweiten Netzwerkprotokolls konfiguriert sind.

7. Verfahren nach Anspruch 1 bis 6,
wobei sich der besagte erste Netzwerkknoten (N1) selbst anzeigt, indem er den besagten Pseudo-Netzwerkknoten (PN1) als einen mit dem besagten ersten Netzwerkknoten (PN1) benachbarten Netzwerkknoten angibt.

8. Verfahren nach Anspruch 1 bis 7,
wobei der besagte erste Netzwerkknoten, (PN1) und der besagte zweite Netzwerkknoten (PN2) Handshake-Nachrichten miteinander austauschen, die ein Datenfeld enthalten, welches den besagten Pseudo-Netzwerkknoten (PN1) angibt.

9. Verfahren nach Anspruch 1 bis 8,
wobei der besagte erste Netzwerkknoten (N1) und der besagte zweite Netzwerkknoten, (N2) die besagten Handshake-Nachrichten in dritte Datenpakete des besagten zweiten Netzwerkprotokolls einkapseln, um die besagten Handshake-Nachrichten über die besagten dritten Datenpakete auszutauschen.

10. Netzwerkknoten (NN),
wobei der besagte erste Netzwerkknoten (NN) Steuerungsmittel (CPU, M) umfasst, die für das Anzeigen des besagten Netzwerkknotens (NN) bei anderen Netzwerkknoten ausgelegt sind, indem sie den besagten anderen Netzwerkknoten angeben:
- Den besagten Netzwerkknoten (NN),
- die von dem besagten Netzwerkknoten unterstützten Netzwerkprotokolle, und
- mit dem besagten Netzwerkknoten benachbarte Netzwerkknoten,
wobei die besagten Steuerungsmittel (M, CPU) für das Einkapseln erster Datenpakete eines ersten Netzwerkprotokolls in zweite Datenpakete eines zweiten Netzwerkprotokolls für die Übertragung der besagten ersten Datenpakete über die besagten zweiten Datenpakete an einen zweiten Netzwerkknoten konfiguriert sind,
**dadurch gekennzeichnet, dass** die besagten Steuerungsmittel (M, CPU) für das Anzeigen eines Pseudo-Netzwerkknotens bei den besagten anderen Netzwerkknoten konfiguriert sind, indem sie den besagten Pseudo-Netzwerkknoten als einen Netzwerkknoten, der das besagte erste Netzwerkprotokoll, jedoch nicht das besagte zweite Netzwerkprotokoll unterstützt, angeben, und indem sie den besagten ersten Netzwerkknoten als einen zwischen dem besagten ersten Netzwerkknoten (N1) und dem besagten zweiten Netzwerkknoten (N2) angeordneten Netzwerkknoten angeben.

## Revendications

1. Procédé d'échange d'informations de routage entre des noeuds de réseau dans un réseau à commutation de paquets,
selon lequel lesdits noeuds de réseau s'annoncent eux-mêmes aux autres noeuds de réseau en indiquant auxdits autres noeuds de réseau
- eux-mêmes,
- les protocoles de réseau pris en charge par eux-mêmes, et
- les noeuds de réseau adjacents à eux-mêmes,
selon lequel un premier desdits noeuds de réseau (N1) est configuré pour encapsuler des premiers paquets de données d'un premier protocole de réseau dans des deuxièmes paquets de données d'un deuxième protocole de réseau pour émettre lesdits premiers paquets de données par le biais desdits deuxièmes paquets de données vers un deuxième noeud de réseau (N2),
**caractérisé en ce que** ledit premier noeud de réseau est configuré pour annoncer un pseudo noeud de réseau (PN1) auxdits autres noeuds de réseau en indiquant ledit pseudo noeud de réseau (PN1) comme étant un noeud de réseau prenant en charge ledit premier protocole de réseau mais non ledit deuxième protocole de réseau, et en indiquant ledit pseudo noeud de réseau (PN1) comme étant un noeud de réseau situé entre ledit premier noeud de réseau (N1) et ledit deuxième noeud de réseau (N2).

2. Procédé selon la revendication 1,
selon lequel ledit premier noeud de réseau (N1) indique
- ledit premier noeud de réseau (N1) et
• soit ledit deuxième noeud de réseau (N2),
• soit un pseudo noeud de réseau supplémentaire annoncé par ledit premier (N1) ou ledit deuxième noeud de réseau (N2) comme étant des noeuds de réseau adjacents audit pseudo noeud de réseau (PN1).

3. Procédé selon les revendications 1 à 2,
selon lequel lesdits noeuds de réseau s'annoncent eux-mêmes en envoyant auxdits autres noeuds de réseau au moins un message d'état de liaison contenant
- une adresse du noeud de réseau indiquant le noeud de réseau correspondant,
- une liste d'adjacence indiquant les noeuds de réseau adjacents qui sont adjacents au noeud de réseau correspondant, et
- une liste de protocoles de réseau indiquant les protocoles de réseau pris en charge par le noeud de réseau correspondant.

4. Procédé selon les revendications 1 à 3,
selon lequel lesdits noeuds de réseau génèrent à partir des messages d'état de liaison reçus différentes tables de routage pour les différents protocoles de réseau pris en charge par le noeud de réseau correspondant.

5. Procédé selon la revendication 4,
selon lequel ledit premier noeud de réseau (N1) annonce ledit pseudo noeud de réseau (PN1) en envoyant auxdits autres noeuds de réseau au moins un message d'état de liaison contenant
- une adresse de pseudo noeud de réseau indiquant ledit pseudo noeud de réseau (PN1),
- une liste d'adjacence indiquant ledit premier noeud de réseau (N1) et
• soit ledit deuxième noeud de réseau (N2),
• soit un pseudo noeud de réseau supplémentaire annoncé par ledit premier (N1) ou ledit deuxième (N2) noeud de réseau, et
- une liste de protocoles de réseau indiquant ledit premier protocole de réseau, mais pas ledit deuxième protocole de réseau.

6. Procédé selon les revendications 1 à 5,
selon lequel ledit premier noeud de réseau (N1) et ledit deuxième noeud de réseau (N2) sont tous deux configurés pour prendre en charge ledit premier protocole de réseau et ledit deuxième protocole de réseau.

7. Procédé selon les revendications 1 à 6,
selon lequel ledit premier noeud de réseau (N1) s'annonce lui-même auxdits autres noeuds de réseau en indiquant ledit pseudo noeud de réseau (PN1) comme étant un noeud de réseau adjacent audit premier noeud de réseau (PN1).

8. Procédé selon les revendications 1 à 7,
selon lequel ledit premier noeud de réseau (PN1) et ledit deuxième noeud de réseau (PN2) échangent l'un avec l'autre des messages de confirmation de réception qui contiennent un champ de données indiquant ledit pseudo noeud de réseau (PN1).

9. Procédé selon les revendications 1 à 8,
selon lequel ledit premier noeud de réseau (N1) et ledit deuxième noeud de réseau (N2) encapsulent lesdits messages de confirmation de réception dans des troisièmes paquets de données dudit deuxième protocole de réseau pour échanger lesdits messages de confirmation de réception par le biais des troisièmes paquets de données.

10. Noeud de réseau (NN),
avec lequel ledit noeud de réseau (NN) comprend des moyens de commande (CPU, M) qui sont adaptés pour annoncer ledit noeud de réseau (NN) aux autres noeuds de réseau en indiquant auxdits autres noeuds de réseau
- ledit noeud de réseau (NN),
- les protocoles de réseau pris en charge par ledit noeud de réseau, et
- les noeuds de réseau adjacents audit noeud de réseau,
avec lequel lesdits moyens de commande (M, CPU) sont configurés pour encapsuler des premiers paquets de données d'un premier protocole de réseau dans des deuxièmes paquets de données d'un deuxième protocole de réseau pour émettre lesdits premiers paquets de données par le biais desdits deuxièmes paquets de données vers un deuxième noeud de réseau,
**caractérisé en ce que** lesdits moyens de commande (M, CPU) sont configurés pour annoncer un pseudo noeud de réseau auxdits autres noeuds de réseau en indiquant ledit pseudo noeud de réseau comme étant un noeud de réseau prenant en charge ledit premier protocole de réseau mais non ledit deuxième protocole de réseau, et en indiquant ledit pseudo noeud de réseau comme étant un noeud de réseau situé entre premier noeud de réseau (N1) et ledit deuxième noeud de réseau (N2).
